# EUROPEAN PATENT SPECIFICATION

(11) **EP 4 380 899 B1**
(45) Date of publication and mention of the grant of the patent: **18.06.2025**
(21) Application number: 22758475.2
(22) Date of filing: 29.07.2022
(51) Int. Cl.: C02F 1/72, C02F 1/30

(54) **PHOTOCATALYTIC PANEL REACTOR FOR THE ANAEROBIC PHOTOREFORMING OF WASTE AQUEOUS EFFLUENTS AND THE PRODUCTION OF HYDROGEN AS CO-PRODUCT**
PHOTOKATALYTISCHER PLATTENREAKTOR FÜR DIE ANAEROBE PHOTOREFORMIERUNG VON ABWÄSSERN UND DIE HERSTELLUNG VON WASSERSTOFF ALS NEBENPRODUKT
RÉACTEUR À PANNEAU PHOTOCATALYTIQUE POUR LE PHOTOREFORMAGE ANAÉROBIE DE DÉCHETS D'EFFLUENTS AQUEUX ET LA PRODUCTION D'HYDROGÈNE EN TANT QUE COPRODUIT

(30) Priority: 05.08.2021 EP 21382740
(43) Date of publication of application: 12.06.2024
(73) Proprietor: Universitat Rovira I Virgili (URV), 43003 Tarragona (ES)
(72) Inventor: PUGA, Alberto, 43003 TARRAGONA (ES); FATTORUSO, Domenico, 43003 Tarragona (ES)
(74) Representative: ABG Intellectual Property Law, S.L.
(86) International application number: PCT/EP2022/071344
(87) International publication number: WO 2023/012057

(56) References cited:
- EP-A1- 1 656 985
- EP-A2- 2 399 871
- US-A- 6 136 186
- US-A1- 2009 188 783

## Description

### FIELD OF THE DISCLOSED SUBJECT MATTER

The present invention refers to the photochemical treatment of waste aqueous effluents, such as wastewaters, under anaerobic conditions.

More particularly, the present invention discloses a photocatalytic panel reactor which only needs to be in direct contact with a source of light, for example sunlight or an artificial source of ultraviolet light, in order to photoreform waste aqueous effluents, leading to the oxidative degradation of said waste. Therefore, thanks to the present invention no external source of energy, neither electricity through an external circuit, nor heat nor any other radiation, is required for the degradation of waste.

Furthermore, a photocatalytic panel reactor according to the present invention has the additional advantage of producing hydrogen as a resulting product of waste photoreforming reaction under anaerobic conditions. Said hydrogen can be used as an energy vector, or stored for a subsequent use.

### BACKGROUND OF THE INVENTION

The treatment of waste aqueous effluents is extremely important in order to protect human health and the environment, as well as for meeting the increasing demand for drinking water.

A vast variety of methods, systems and devices have been developed specifically for purifying waste aqueous effluents and degrading different types of waste which are usually diluted therein.

Usually, during the primary steps of the effluent treatment, purely mechanical methods are employed. In turn, secondary treatments frequently involve biological processes.

Finally, those of the tertiary type comprise chemical-physical treatments, such as: chemical precipitation, reverse osmosis, ultrafiltration, stripping, activated carbon adsorption, redox, neutralization, ion exchange, electrodialysis, disinfection, breakpoint and/or chlorination. Recently, some photo electrochemical processes have also been conceived for degrading different types of waste diluted in aqueous effluents.

On the other hand, it would be advantageous if said purifying methods could also be capable of valorizing the waste present in wastewaters or other aqueous effluents by converting it, at least partially, into hydrogen.

One of said electrochemical processes is described, for example, in patent application WO2020260971A1. This document discloses a modular photocatalytic system using photo-electrochemical cells (PECs) powered by electricity from photovoltaic cells (which are in turn activated by sunlight) for degrading waste diluted in water effluents. Even though said modular photocatalytic systems are a step forward compared to older chemical-physical treatments, they need an external electrical circuit with its own power supply to work.

Another example of this approach is described in patent CN102826506B. This document discloses a device consisting of two independent photoelectrocatalytic cells, one designed to produce electricity between two electrodes immersed in a solution containing an appropriate redox couple, and another cell which is powered by the bias voltage generated in the former one to drive the degradation of waste and the production of hydrogen on different electrodes, anode and cathode, respectively. Therefore, the system requires a sophisticated design to install electrical circuits to connect the two separated compartments, and to provide electrical current at a certain bias voltage for the processes to proceed.

Other techniques for photochemical hydrogen production from water rely on the use of concentrated sunlight for the dissociation (or splitting) of water. For example, document CN111453696A describes a concentrating fixed film solar photocatalytic hydrogen production device, mounted on a parabolic concentrator to promote the dissociation of water for the production of hydrogen. Another invention based on the same process described in patent application US2009321244A1 entails the focusing of sunlight beams onto a reactor wherein water is also dissociated for the production of hydrogen in the presence an inorganic photocatalyst. The concentration of sunlight is technically demanding and results in high operating temperatures, thus imposing construction difficulties and careful engineering of materials and installations. Due to high temperature, water is generally in its vapour phase under these conditions, thus implying additional challenges due to the eventual increase in operating pressures. Another water photolysis system which might be powered by sunlight is described in patent US7909979B2. In this invention, water from a water stream is said to be evaporated and the vapour transported into a photocatalytic layer where its dissociation occurs under irradiation. Again, water evaporation is required, consuming energy, and this is expected to negatively affect the productivity of the process.

Moreover, these photolytic systems described in patents CN111453696A, US2009321244A1 and US7909979B2 involve the endergonic dissociation of water into hydrogen and oxygen and are known to be slow at room or moderate temperatures due to their sluggish kinetics. Further relevant documents are EP 2 399 871 A2, US 6 136 186 A, US 2009/188783 A1 and EP 1 656 985 A1.

Therefore, there is a need for developing new treatments that require no external source of energy, nor heat, nor any other radiation, nor concentration of sunlight, nor the transportation of electricity, nor evaporation of water, nor high temperature and/or pressure conditions, and that are able to generate hydrogen from aqueous effluents by concomitantly degrading waste, such as pollutants or other oxidizable substrates contained in them, only with the aid of light irradiation.

### DESCRIPTION OF THE INVENTION

The present invention is intended to address the problems and disadvantages of the prior art, mentioned above. The essential features of the invention are set out in independent apparatus claim 1 and use claim 8. Further, preferred embodiments are described in dependent claims 2-7.

A first object of the present invention is a photocatalytic panel reactor for the anaerobic photoreforming of waste aqueous effluents and the production of hydrogen as co-product, characterized in that it comprises:
- At least one flat panel having;
   o a shallow container and
   o a top transparent window, said transparent window being disposed facing a source of light;
- a bed composed of a photocatalyst material comprising at least one photoactive semiconductor which is immobilised therein, the bed being located in an irradiated surface of the flat panel;
- a flow region located in the shallow container , said region being arranged so that a waste aqueous effluent flows through it and enters into close contact with the photocatalyst material immobilised in the bed; and
- a sealing gasket disposed between the shallow container and the transparent window, intended to ensure the tightness of the panel and its isolation from ambient air;
   wherein
- the bed (5) is a layer having a thickness in the range of 1-100 micrometers; and
- the photocatalyst material also contains at least one co-catalyst in the form of particles deposited on the surface of the photoactive semiconductor, said co-catalyst comprising:
   o metals, such as Cu, Fe, Co, Ni, Zn, Sn, Cr, Pb, Bi, Ag, Au, Pd, Rh, Ru, Pt, Ir, or Cd;
   o metal oxides, metal sulphides, metal phosphides and/or organometallic species; and
   o combinations thereof.

The use of flat panels in the present invention is advantageous since they are easily designed, they do not require light concentration (for example by means of a parabolic concentrator) and -simultaneously- ensure a large contact area between the irradiated photocatalyst and the aqueous effluent.

In addition, the fact of disposing the photocatalyst material in the form of a bed, (i.e., a thin layer having a thickness in the range of 1-100 micrometers) ensures effective irradiation and contact with the waste aqueous effluent and minimizes the amount of photocatalyst material required.

The bed composed of photocatalyst material and at least one co-catalyst can be located on the bottom of the shallow container panel or alternatively on other surfaces of the panel. In any case, the photocatalyst and co-catalyst bed must be immobilised on a surface which will be easily irradiated by light, for example natural sunlight or other kinds of radiation. For example, another option is the deposition of the photocatalyst and co-catalyst on the inner surface of the top transparent window which covers the panel reactor.

The combination of at least one the co-catalyst with the photocatalyst material is required for enabling the hydrogen production under anaerobic conditions. In fact, it is believed that claimed co-catalysts act as active sites in the photocatalyst material enabling the formation of hydrogen and the subsequent evolution of the corresponding chemical reaction.

The photocatalytic material comprises at least one photoactive semiconductor, which is generally present in the form of particles. Said particles preferably have a size within the range of 1 nanometre (1 nm) and 1 millimetre (1 mm). Particle sizes in the range within 1 nanometre (1 nm) and 1 micrometre (1 µm) are specially preferred since they have higher surface area as compared with bigger particles.

The photoactive semiconductor is preferably chosen among:
- Metal oxides, such as: TiO₂, FeO, Fe₂O₃, Fe₃O₄, CoO, Co₂O₃, Cr₂O₃, MnO, Mn₂O₃, MnO₂, NiO, Ni₂O₃, Cu₂O, CuO, ZnO, ZrO₂, WO₃, SnO, SnO₂, Nb₂O₅, Ta₂O₅, In₂O₃, Bi₂O₃, Sb₂O₃, Ce₂O₃, CeO₂, Ag₂O, Ga₂O₃, CdO, Hg₂O, HgO, PbO, PbO₂, and/or PdO;
- Mixed metal oxides including perovskites, such as: AlTiO₃, Al₂TiO₅, BaTiO₃, CaTiO₃, MgTiO₃, SrTiO₃, CoTiO₃, FeTiO₃, NiTiO₃, CuTiO₃, MnTiO₃, ZnTiO₃, KNbO₃, NaNbO₃, YFeO₃, CuFe₂O₄, BiVO₄, KTaO₃ and/or NaTaO₃;
- Metal sulphides, such as: TiS₂, FeS, Fe₂S₃, CoS, Co₂S₃, Cr₂S₃, MnS, MnS₂, NiS, Cu₂S, CuS, ZnS, CdS, ZrS₂, WS₂, WS₃, SnS, SnS₂, MoS₂, In₂S₃, Bi₂S₃, Sb₂O₃, Ce₂S₃, CeS₂, Ag₂S, Ga₂S₃, Hg₂S, HgS, PbS, PbS₂, and/or PdS;
- Metal halides, such as: Agl, AgBr, AgCl, HgCl₂, and/or Hg₂Cl₂;
- Metal phosphates, such as: Cu₃(PO₄)₂, Cu₂(OH)PO₄, Ag₃PO₄, Fe₃(PO₄)₂, Zn₃(PO₄)₂, Ni₃(PO₄)₂, FePO₄, CePO₄, BiPO₄, and/or TiP₂O₇;
- Organic semiconductors such as: covalent organic frameworks, C₃N₄, polyacetylene, polythiophene, and/or polypyrrole; these materials might be doped or undoped;
- Hybrid organic-inorganic semiconductors, such as: for example metal-organic frameworks; and
- combinations thereof. In fact, the combination of two or more different photoactive semiconductors is preferred since it usually exhibits advantageous results.

On the other hand, the use of TiO₂ is preferred, since it is inexpensive, stable, photoactive under UVA frequencies and non-toxic. The use of SrTiO₃ is also preferred, since it is remarkably active under UV. For visible light activity, CuO, CdS, C₃N₄ are efficient, although they tend to be less stable.

The transparent window is made from a material which is transparent to at least part of the sunlight or ultraviolet photons, such as: borosilicate glass, low-iron glass, quartz, and/or polycarbonate.

The shallow container is preferably made from a rigid material such as:
- a metal selected between aluminium, stainless steel, brass, iron, and/or titanium;
- a plastic selected between resins, polyvinyl chloride, polyurethane, polypropylene and/or polyethylene;
- a ceramic material selected between alumina, clay, and/or stone;
- and combinations thereof.

The shallow container is preferably provided with at least one inlet port and at least one outlet port for the flow of aqueous effluent. Said inlet and outlet ports can be, for example, orifices provided in the container walls which allow the aqueous effluent to enter and exit the panel.

According to the present invention, the photocatalytic panel reactor is provided with a recirculation circuit, said circuit being provided with at least one external pump and being intended to make the aqueous effluent recirculate. The recirculation circuit is also provided with a tank and the external pump is intended to make the aqueous effluent circulate from the tank to container and then from the container back to the tank. This tank can be closed or open to external streams, resulting in closed circulation or open continuous circulation of aqueous effluents.

The present invention contemplates the separation of the gas generated during the photoreforming reaction from the aqueous effluent. This gas-liquid separation can take place inside the panel reactor or externally at any location of the liquid recirculation system.

According to the invention, gas outlet ports are provided in the container, which serve as gas exit conductions (i.e., said outlet ports are connected through tubes to at least one gas-tight storage tank). In an alternative embodiment of the invention, the gas is separated outside the panel. To that end, a gas-liquid separation chamber is included in an elevated part of the recirculation circuit. In addition, the gas-liquid separation chamber is connected through tubes to at least one gas-tight storage tank. Additionally, valves can be used to prevent the gas from exiting the tank or from flowing back to the photocatalytic reaction panel.

In a preferred embodiment of the invention, the panel reactor is set facing sunlight in a way that ensures efficient irradiation of the bed containing the photocatalyst material. In a preferred orientation, the panel is inclined at the appropriate angle to ensure incident sunlight irradiation to penetrate through the transparent window and impinge on the photocatalyst bed in perpendicular right angle. This might involve the inclination and orientation to change depending on the position of the Sun in the sky. In particular, the panel reactor may be provided with a sun tracking system on which the at least one flat panel is mounted, the sun tracking system being intended to direct the top face of said panel along the azimuth.

In an alternative embodiment of the present invention, the at least one flat panel is static and faces the azimuth at midday to maximise irradiation of the photocatalyst bed with no need for mechanical motion of the panel.

### ADVANTAGES OF THE INVENTION

As already anticipated, the photocatalytic panel reactor according to the present invention only requires the direct contact of light irradiation, with the photocatalytic material and the aqueous effluent for the photoreforming reaction to proceed, resulting in the production of hydrogen and the degradation of the waste. No external source of energy is required.

On the other hand, all prior art waste degradation methods and systems in flat panel reactors powered by natural, non-concentrated light irradiation, known by the applicant are aerobic. Therefore, the degradation is destructive and unable of converting -at least part of- said waste, into useful co-products. Conversely, the present invention, contemplates the anaerobic photoreforming of the waste diluted in the aqueous effluent, and is capable of producing hydrogen as a useful co-product.

In addition, the present panel is effective in the treatment of many different wastes contained in the aqueous effluents, which can be either organic or inorganic, thus constituting wastewater streams of a wide range of compositions. The origin of such wastewater streams can be either industrial or domestic. The waste species might be either innocuous or toxic, such toxicity not being detrimental to the efficacy of the photoreforming reaction or to the production of hydrogen.

In fact, the photocatalytic panel reactor according to the present invention can be used for the treatment of a wide variety of waste aqueous effluents, which have the potential to result in the production of hydrogen and in the decomposition of waste components, when the panel reactor is operated under irradiation, such as waste aqueous effluents derived from:
- food industry activities, chiefly cleaning waters from: fruit-processing plants (including juice production plants), vegetables-processing plants, plants producing sauces, plants producing dairy products, meat-processing plants, or fish-processing plants, among others. These effluents might contain a range of saccharides, oligosaccharides, proteins, fats, furanic derivatives, alcohols, polyalcohols, aldehydes, or organic acids, among others;
- pharmaceutical industry, that is, cleaning waters from pharmaceutical plants containing drugs or other active ingredients, such as: antibiotics, antiinflammatory, antifungals, antiparasitics, antidepressants, hormone suppressants, contraceptives, antivirals, antipsychotics, analgesics, anxiolytics, gastrointestinal protectors, or antitumor agents, among many others;
- cosmetic or personal care products industries, chiefly cleaning waters containing dispersants, moisturizing agents, deodorants, shampoos, hair conditioners, shower gels, perfumes, makeup, or sun filters, among others;
- chemical or petrochemical industries, that is, produced or process aqueous effluents containing surfactants, soaps, detergents, fabric conditioners, fragrances, emulsifiers, polymers, oligomers, chemical intermediates, hydrocarbons, halogenated organic substances, pesticides, inks, paints, or dyes, among others;
- biorefineries or biofuel production plants, including effluents from the biodiesel industry containing glycerine, or aqueous effluents from plants processing lignocellulosic biomass, containing saccharides, oligosaccharides, terpenes, proteins, fats, furanic derivatives, alcohols, polyalcohols, aldehydes, or organic acids, among others;
- papermaking industries, especially paper pulp production and/or processing aqueous effluents;
- farming and agricultural activities, including liquid manure from swine, poultry, dairy, or other animal farming activities, and also including surface or underground aqueous effluents contaminated with pesticides, fertilizers, or other agrochemical substances; and
- human sanitation activities, such as domestic or municipal wastewaters either untreated, or treated aqueous effluents from wastewater treatment plants, including activated sludge.

According to the present invention, a photoreforming reaction is initiated when the photocatalyst material absorbs a predetermined quantity of light. Then, separated charges are generated in the semiconductor photocatalyst material and subsequently transferred to chemical species of waste adsorbed on the surface of the material, thus leading to oxidation and reduction chemical reactions. In particular, the photocatalyst containing at least one photoactive semiconductor material, is able to absorb photons forming part of the incident light irradiation.

Upon photon absorption, electrons in the photoactive material are promoted to a different state of higher energy, leaving behind a positive charge or hole. Most frequently, electrons are promoted from the valence band to the conduction band of a semiconductor photoactive material. This results in the valence and conduction bands becoming positively and negatively charged, respectively. Such separated photogenerated charges may migrate to the surface of the material before recombining, and eventually, participate in chemical reactions with adsorbed species. Electrons are prone to be transferred to adsorbed protonic species resulting in the reduction of hydrogen into molecular hydrogen, that is, dihydrogen, provided the reaction takes place under anoxic, anaerobic conditions. In aqueous media, these protonic species may be oxonium cations, water molecules or hydrogen-containing organic or inorganic species. On the other hand, the photogenerated positive charges in the surface of the material may be quenched by transfer of electrons from adsorbed species, which in turn become oxidised. If these are organic adsorbed species, their oxidation may take place in several steps giving rise to partly oxidised intermediates and eventually to fully oxidised carbon species, most frequently, carbonates, hydrogen carbonates, carbonic acid and/or carbon dioxide.

Depending on the composition of the waste species in the aqueous stream, other intermediates, coproducts, or products of the photoreforming reaction may be expected. The presence of nitrogen, phosphorus, sulfur, chlorine, or other heteroatoms might result in the generation of inorganic salts in solution, such as nitrates, nitrites, ammoniums, phosphates, phosphites, phosphoniums, sulfates, sulfites, sulfides, or chlorides, or to the release of gaseous products such as dinitrogen, ammonia, nitrogen oxides, hydrogen sulfide, sulfur oxides or dichlorine.

Finally and as already anticipated, the photocatalytic panel reactor according to the present invention has the additional advantage of producing hydrogen as a resulting product of said waste degradation reaction under anaerobic conditions. Said hydrogen can be used as an energy vector.

Potential uses of hydrogen as energy vector include its utilisation as a fuel in internal combustion engines or fuel cells for transportation or electricity generation, or in furnaces for producing heat or powering high temperature processes such as chemical transformations or other industrial operations. Moreover, hydrogen can be used as a feedstock for chemical processes such as ammonia synthesis, hydrogenation of carbon monoxide and/or carbon dioxide into hydrocarbons or oxygenated organic substances, among others, or stored for a subsequent use.

It is to be understood that both the foregoing general description and the following detailed description are exemplary and are intended to provide further explanation of the disclosed subject matter claimed.

The accompanying drawing, which is hereby incorporated and constitutes part of this specification, is included to illustrate and provide a further understanding of the and system of the disclosed subject matter. Together with the description, the drawing serves to explain the principles of the disclosed subject matter.

### BRIEF DESCRIPTION OF THE ANNEXED DRAWING

A detailed description of various aspects, features, and embodiments of the subject matter described herein is provided with reference to the accompanying drawing, which is briefly described below. The drawing is illustrative and is not necessarily drawn to scale, with some components and features being exaggerated for clarity. The drawing illustrates various aspects and features of the present subject matter and may illustrate one possible embodiment or example of the present subject matter in whole or in part.

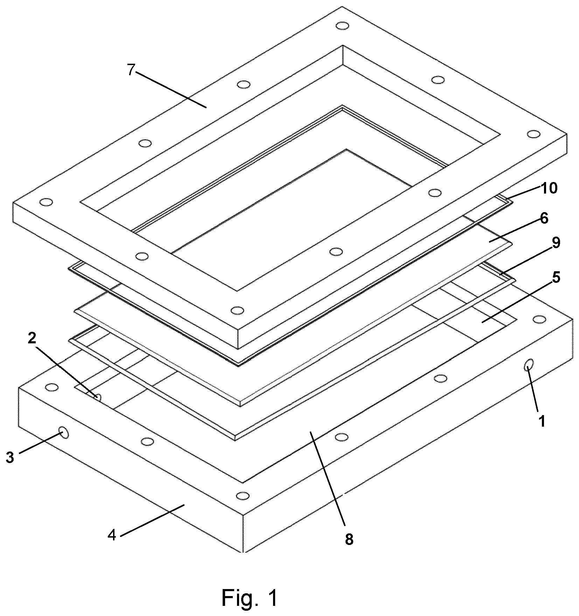

FIG. 1 is an exploded perspective view of an embodiment of the photocatalytic panel reactor according to the present invention.

### EXPLANATION OF NUMERICAL REFERENCES

- 1: inlet port;
- 2: outlet port;
- 3: gas outlet port;
- 4: shallow container;
- 5: photocatalyst bed;
- 6: top window;
- 7: window frame;
- 8: flow region;
- 9: sealing gasket;
- 10: protective gasket.

### DETAILED DESCRIPTION OF THE INVENTION

FIG. 1 shows one possible embodiment of the photocatalytic panel reactor according to the present invention.

In this particular example of the invention, the reactor comprises one flat panel formed by a shallow rectangular container (4) and a top rectangular window (6) which is transparent and is intended to face towards a source of light.

The shallow container (4) has vertical walls provided with housing holes. In turn, the perimeter of the top window (6) has a window frame (7) with a plurality of through holes.

A sealing gasket (9) is interposed between the upper part of the walls of the shallow container (4) and the top window (6). In addition, in this particular embodiment of the invention a protective gasket (10) is also placed on top of the top window (6), the window frame (7) being placed sitting on top of such gasket (9b). Finally, screws are passed through the aligned holes of both the container (4) and the frame (7), and tightened with bolts to close the panel, leaving the flow region (8) between the upward surface of the container and the bottom side of the window (6). As the sealing gasket (9) and the protective gasket (10) are compressed during the tightening of the screws and bolts, the interior of the flow region (8) is sealed and, simultaneously, the top window (6) which in this particular embodiment is made of glass, is protected from possible stress and local overpressure, thus avoiding its cracking or blowing up.

A bed (5) composed of a photocatalyst material, comprising at least one photoactive semiconductor is -in this particular case- disposed inside flow region (8) and immobilised therein.

The flow region (8) is in fluid communication with an inlet port (1) and an outlet port (2), in such a way that a waste aqueous effluent enters into the flow region (8) via the inlet port (1), flows through it contacting with the photocatalyst material immobilised in the bed (5). Finally, the aqueous effluent leaves the flow region (8) through outlet port (2).

In this embodiment of the invention, the panel reactor is also provided with a gas outlet port (3), through which the hydrogen produced by waste degradation reaction under anaerobic conditions leaves the panel.

### EXPERIMENTAL EXAMPLES

In order to prove the feasibility of this invention, experimental examples of one possible embodiments of a panel reactor according to the present invention are herein described. These examples include the design and construction of the panel, the preparation of a photocatalyst and its deposition in the form of photocatalyst bed, and an experimental test for hydrogen production under natural sunlight.

### Experimental example 1

### Panel design and construction.

A prototype panel has been fabricated according to the drawing containing the following parts:
- A rectangular shallow container (4) made in aluminium, its external dimensions being 200 × 300 mm, and its height is 30 mm. The top side of the container has a 140 × 240 mm rectangular cavity, and its depth is 20 mm. Moreover, a 5 mm step is made around the cavity on top side rim of the container, and a slight carved channel is also machined along the step to allow for the sealing gasket to sit on it. Three side orifices were made across the side of the container to serve as liquid inlet (1), liquid outlet (2) and gas outlet (3) ports. Holes for pass-through screws are made across the panel external sides, as illustrated in the drawing.
- A rectangular sealing rubber gasket (9) sitting on top of the step and along the channel of the container, as described above.
- A rectangular low iron borosilicate glass top window (6), 5 mm thick, whose dimensions are approximately 150 × 250 mm, to sit on top of the sealing gasket (9).
- A protective rubber gasket (10) on top of the glass window (6) .
- A rectangular window frame (7), 200 × 300 mm external size, and 10 mm thick, on top of the protective gasket (10). Holes for pass-through screws are made through the frame, aligned to those of the panel, as illustrated in the drawing.
- Through the aforementioned holes, screws are inserted so that they protrude and can be tightened with bolts to close, secure, and tight-seal the panel.

### Photocatalyst preparation.

As typical photocatalyst, platinum on titanium dioxide was prepared as follows. Hexachloroplatinic acid hexahydrate (55.3 mg) was dissolved in water (50 mL). Titanium dioxide powder (Aeroxide^{®} P25 from Evonik, 2.01 g) was added and the suspension stirred for 2 h. Then, water was distilled off using a rotary evaporator, leaving a yellow powder which was then calcined under static air atmosphere by heating at 2 °C min⁻¹ from 30 to 400 °C, then maintaining the sample at 400 °C for 2 h and allowed to cool down slowly. The resulting pale yellow solid was then activated by thermal treatment under dihydrogen (20 mL min⁻¹) diluted with argon (500 mL min⁻¹) by heating at approximately 10 °C min⁻¹ from 30 to 450 °C, then maintaining the sample at 450 °C for 3 h. The resulting grey solid had an approximate platinum concentration of 1% by weight relative to TiO₂, and will be hereinafter designated as Pt-1/TiO₂.

### Deposition of the photocatalyst on the panel.

The photocatalyst was deposited by a simple casting method on the cavity bottom in the shallow container (4) forming a bed (5). A suspension containing Pt-1/TiO₂ (1.00 g) and deionized water (20 mL) was prepared and sonicated for 15 min to disperse the solid. The suspension was carefully deposited on the shallow container cavity bottom and allowed to dry out by evaporation of water under ambient air for several hours. A layer of Pt-1/TiO₂ photocatalyst bed was uniformly distributed on the container inner surface.

### Testing of the photocatalytic hydrogen production under natural sunlight.

The panel was tightly closed as indicated above. To test the photoreforming activity, the chosen aqueous feedstock was a mixture of glycerol and water (20:80 volume ratio). After filling the flow region with the glycerol/water mixture, most residual air bubbles were removed through the gas outlet port by turning the panel to allow the liquid to fill most headspace by gravity. Liquid inlet and outlet ports were closed, whereas the gas outlet port was connected through a silicone rubber tube to a pressure gauge and a sampling valve. Initial pressure was roughly atmospheric (1.0 bar). The panel was exposed to natural sunlight during 3 h (12:00 to 15:00, Central European Summer Time) on a slightly inclined (< 10 ° angle) orientation facing the Sun, in a well irradiated, shade-free area in the Sescelades campus in Tarragona (approximate location: 41.133 ° N, 1.245 ° E), on the 30^{th} of July 2021. After an initial period (< 0.5 h), bubbles started to be formed on the photocatalyst bed (5). With increasing sunlight irradiation time, bubble formation became faster and more visible, eventually resulting in significant gas build-up. In parallel, the panel became slightly warm, and some additional bubbles appeared evenly within the liquid on the flow region. After sunlight exposure, the panel was taken indoors, allowed to cool down and settle. The final pressure was 1.6 bar. A gaseous sample (8 mL) was collected in a gastight syringe and injected in a gas chromatograph (Agilent 990 Micro GC System) allowing to identify and quantify hydrogen. The amount of evolved hydrogen calculated according to its concentration, based on previous equipment calibration and on the estimated headspace volume, was approximately 1.5 mL (normal conditions).

### Experimental example 2

### Testing of the photocatalytic hydrogen production from juice production plant wastewaters, recirculated from an external tank, under natural sunlight.

An experiment was performed following a similar procedure to the one described with regard to experimental example 1, using a mixture of glycerol and water as a model feedstock, but in this case using wastewaters sourced from a local juice production plant.

The panel was loaded with a freshly activated Pt-1/TiO₂ sample (1.0 g) which covered essentially the entire inner, upward-facing, surface of the shallow container (4) shown in Fig. 1. Likewise, the panel was tightly closed by means of sealing gaskets (elements 9 and 10 in Fig. 1). The inlet and outlet ports (elements 1 and 2 in Fig. 1) were connected to the waste aqueous effluent circuit by means of silicone rubber tubing. In particular, the effluent circuit consisted of a tank (1 L) connected to the inlet of a peristaltic pump, which flowed the waste aqueous effluent from said tank to the panel through inlet port 1 by means of silicone rubber tubing. The tank was further equipped with a gas-tight valve so that it could be used as a gas-liquid separator (see below). Conversely, the outlet port (2) was connected directly to the tank, enabling the recirculation of the waste aqueous effluent back to said tank.

The tank and the panel container were then filled with a sample of juice production wastewaters (total volume = 1.5 L, physico-chemical parameters summarized in Table 1) by first filling the tank and then pumping the wastewaters from into the panel until the shallow container was completely full. Next, the gas port (3 in Fig. 1) was employed as a purging port by flowing ultrapure argon (99.9995%, ca. 20 mL min⁻¹) through the aqueous effluent inside the shallow panel container under continuous recirculation of the effluent by means of the peristaltic pump. In this way, argon flowed from the panel into the tank. By keeping the gas-tight valve in the tank open, argon displaced the air in the tank headspace. This purging operation was continued until the level of oxygen (remaining from atmospheric air initially in the tank) in the headspace was below 0.5% by volume.

Initial pressure was slightly above atmospheric (ca. 1.2 bar). The panel was exposed to natural sunlight during 3 h (12:00 to 15:00, Central European Summer Time) at an adjusted angle (35 ° angle) to attain a nearly perpendicular incidence of sun beams on the photocatalyst bed, in a well irradiated, shade-free area in the Sescelades campus in Tarragona (approximate location: 41.133 ° N, 1.245 ° E), on the 7^{th} of April 2022. During the entire experiment, the waste aqueous effluent was continuously recirculated by means of the peristaltic pump, also carrying any gas bubbles formed through the effluent circuit into the tank headspace. The average sunlight irradiance, as measured using a calibrated pyranometer, was 0.87 kW m⁻². Bubbles started to be formed on the photocatalyst bed immediately, resulting in significant pressure build-up in the tank headspace. Samples were collected after every hour of sunlight irradiation experiment through the gas-tight valve on the tank headspace by using a gas-tight syringe, and injected in the gas chromatograph described above. The amounts of evolved hydrogen calculated according to their concentration, based on previous equipment calibration and on the estimated headspace volume, were as follows:

| Table 1 | |
|---|---|
| **time/h** | **V(H₂)/mL (at standard conditions, i.e. 273.15 K and 1.0 bar)** |
| 1 | 211 |
| 2 | 292 |
| 3 | 328 |

The present invention should not be taken to be limited to the embodiment herein described. Other arrangements may be carried out by those skilled in the art based on the present description. Accordingly, the scope of the invention is defined by the following claims.

## Claims

1. Photocatalytic panel reactor for the anaerobic photoreforming of waste aqueous effluents and the production of hydrogen as co-product **characterized in that** it comprises:
- at least one flat panel comprising:
o a shallow container (4) and
o a top transparent window (6), said top window (6) being intended to face a source of light;
- a bed (5) composed of a photocatalyst material, comprising at least one photoactive semiconductor, immobilised therein, the bed being located on an irradiated surface of the flat panel;
- a flow region (8) located in the shallow container (4), said region being arranged so that a waste aqueous effluent flows through it and enters into close contact with the photocatalyst material immobilised in the bed (5); and
- a sealing gasket (9) disposed between the shallow container (4) and the top transparent window (6), intended to ensure the tightness of the panel and its isolation from ambient air;
- (i) gas outlet ports (3) provided in the container (4), said outlet ports being connected through tubes to at least one gas-tight storage tank; or, alternatively, (ii) a recirculation circuit provided with:
- a tank
- at least one external pump intended to make the aqueous effluent recirculate from the tank to the container (4) and then from the container (4) back to the tank; and
- a gas-liquid separation chamber, said gas-liquid separation chamber being connected through tubes to at least one gas-tight storage tank and comprised in an elevated part of the recirculation circuit.
wherein
- the photocatalyst material also contains at least one co-catalyst in the form of particles deposited on the surface of the photoactive semiconductor, said co-catalyst comprising:
o metals, such as Cu, Fe, Co, Ni, Zn, Sn, Cr, Pb, Bi, Ag, Au, Pd, Rh, Ru, Pt, Ir, or Cd;
o metal oxides, metal sulphides, metal phosphides and/or organometallic species; and
o combinations thereof.

2. Panel reactor according to claim 1, wherein the bed (5) is a layer having a thickness in the range of 1-100 micrometers.

3. Panel reactor according to any previous claim wherein the photoactive semiconductor is chosen among:
- Metal oxides, such as: TiO₂, FeO, Fe₂O₃, Fe₃O₄, CoO, Co₂O₃, Cr₂O₃, MnO, Mn₂O₃, MnO₂, NiO, Ni₂O₃, Cu₂O, CuO, ZnO, ZrO₂, WO₃, SnO, SnO₂, Nb₂O₅, Ta₂O₅, In₂O₃, Bi₂O₃, Sb₂O₃, Ce₂O₃, CeO₂, Ag₂O, Ga₂O₃, CdO, Hg₂O, HgO, PbO, PbO₂, and/or PdO;
- Mixed metal oxides including perovskites, such as: AlTiO₃, Al₂TiO₅, BaTiO₃, CaTiO₃, MgTiO₃, SrTiO₃, CoTiO₃, FeTiO₃, NiTiO₃, CuTiO₃, MnTiO₃, ZnTiO₃, KNbO₃, NaNbO₃, YFeO₃, CuFe₂O₄, BiVO₄, KTaO₃, and/or NaTaO₃;
- Metal sulphides, such as: TiS₂, FeS, Fe₂S₃, CoS, Co₂S₃, Cr₂S₃, MnS, MnS₂, NiS, Cu₂S, CuS, ZnS, CdS, ZrS₂, WS₂, WS₃, SnS, SnS₂, MoS₂, In₂S₃, Bi₂S₃, Sb₂O₃, Ce₂S₃, CeS₂, Ag₂S, Ga₂S₃, Hg₂S, HgS, PbS, PbS₂, and/or PdS;
- Metal halides, such as: AgI, AgBr, AgCl, HgCl₂, and/or Hg₂Cl₂;
- Metal phosphates, such as: Cu₃(PO₄)₂, Cu₂(OH)PO₄, Ag₃PO₄, Fe₃(PO₄)₂, Zn₃(PO₄)₂, Ni₃(PO₄)₂, FePO₄, CePO₄, BiPO₄, and/or TiP₂O₇;
- Organic semiconductors such as: covalent organic frameworks, C₃N₄, polyacetylene, polythiphene, and/or polypyrrole; these materials might be doped or undoped;
- Hybrid organic-inorganic semiconductors, such as: for example metal-organic frameworks; and
- combinations thereof.

4. Panel reactor according to any previous claim, wherein the top transparent window (6) is made from borosilicate glass, low-iron glass, quartz, and/or polycarbonate.

5. Panel reactor according to any previous claim, wherein the shallow container (4) is preferably made from:
- a metal selected between aluminium, stainless steel, brass, iron, and/or titanium;
- a plastic selected between resins, polyvinyl chloride, polyurethane, polypropylene and/or polyethylene;
- a ceramic material selected between alumina, clay, and/or stone; and
- combinations thereof.

6. Panel reactor according to any previous claim, wherein the shallow container (4) is provided with at least one inlet port (1) and at least one outlet port (2) for the flow of the aqueous effluent.

7. Panel reactor according to any previous claim, also comprising a sun tracking system on which the at least one flat panel is mounted, the sun tracking system being intended to direct the top transparent window (6) of said panel along the azimuth.

8. Use of a photocatalytic panel reactor according to any of claims 1 to 7, for the treatment of waste aqueous effluents derived from food industry activities, pharmaceutical industries, cosmetic or personal care products industries, chemical or petrochemical industries, biorefineries or biofuel production plants, papermaking industries, farming and agricultural activities and human sanitation activities.

## Patentansprüche

1. Photokatalytischer Plattenreaktor zur anaeroben Photoreformierung von wässrigen Abfallabwässern und zur Erzeugung von Wasserstoff als Nebenprodukt, **dadurch gekennzeichnet, dass** er Folgendes umfasst:
- mindestens eine flache Platte, die Folgendes umfasst:
o einen flachen Behälter (4) und
o ein transparentes oberes Fenster (6), wobei das obere Fenster (6) dazu bestimmt ist, einer Lichtquelle zugewandt zu sein;
- ein Bett (5), das aus einem Photokatalysatormaterial besteht, das mindestens einen photoaktiven Halbleiter umfasst, der darin immobilisiert ist, wobei sich das Bett auf einer bestrahlten Oberfläche der flachen Platte befindet;
- einen Strömungsbereich (8), der sich in dem flachen Behälter (4) befindet, wobei der Bereich so angeordnet ist, dass ein wässriger Abfallabstrom durch ihn strömt und in engen Kontakt mit dem Photokatalysatormaterial gelangt, das in dem Bett (5) immobilisiert ist; und
- eine Dichtung (9), die zwischen dem flachen Behälter (4) und dem transparenten oberen Fenster (6) angeordnet ist und dazu bestimmt ist, die Dichtigkeit der Platte und ihre Isolierung von der Umgebungsluft zu gewährleisten;
- (i) Gasauslassöffnungen (3), die in dem Behälter (4) vorgesehen sind, wobei die Auslassöffnungen durch Rohre mit mindestens einem gasdichten Speichertank verbunden sind; oder alternativ (ii) einen Rezirkulationskreislauf, der versehen ist mit:
- einem Tank
- mindestens einer externen Pumpe, die dazu bestimmt ist, den wässrigen Abstrom von dem Tank zu dem Behälter (4) und dann von dem Behälter (4) zurück zu dem Tank rezirkulieren zu lassen; und
- einer Gas-Flüssigkeits-Trennkammer, wobei die Gas-Flüssigkeits-Trennkammer durch Rohre mit mindestens einem gasdichten Speichertank verbunden ist und in einem erhöhten Teil des Rezirkulationskreislaufs enthalten ist,
wobei
- das Photokatalysatormaterial auch mindestens einen Cokatalysator in Form von Partikeln enthält, die auf der Oberfläche des photoaktiven Halbleiters abgeschieden sind, wobei der Cokatalysator Folgendes umfasst:
o Metalle, wie etwa Cu, Fe, Co, Ni, Zn, Sn, Cr, Pb, Bi, Ag, Au, Pd, Rh, Ru, Pt, Ir oder Cd;
o Metalloxide, Metallsulfide, Metallphosphide und/oder organometallische Spezies; und
o Kombinationen davon.

2. Plattenreaktor nach Anspruch 1, wobei das Bett (5) eine Schicht mit einer Dicke im Bereich von 1-100 Mikrometern ist.

3. Plattenreaktor nach einem der vorhergehenden Ansprüche, wobei der photoaktive Halbleiter ausgewählt ist aus:
- Metalloxiden, wie etwa: TiO₂, FeO, Fe₂O₃, Fe₃O₄, CoO, Co₂O₃, Cr₂O₃, MnO, Mn₂O₃, MnO₂, NiO, Ni₂O₃, Cu₂O, CuO, ZnO, ZrO₂, WO₃, SnO, SnO₂, Nb₂O₅, Ta₂O₅, In₂O₃, Bi₂O₃, Sb₂O₃, Ce₂O₃, CeO₂, Ag₂O, Ga₂O₃, CdO, Hg₂O, HgO, PbO, PbO₂ und/oder PdO;
- gemischten Metalloxiden, einschließlich Perowskiten, wie etwa: AlTiO₃, Al₂TiO₅, BaTiO₃, CaTiO₃, MgTiO₃, SrTiO₃, CoTiO₃, FeTiO₃, NiTiO₃, CuTiO₃, MnTiO₃, ZnTiO₃, KNbO₃, NaNbO₃, YFeO₃, CuFe₂O₄, BiVO₄, KTaO₃ und/oder NaTaO₃;
- Metallsulfiden, wie etwa: TiS₂, FeS, Fe₂S₃, CoS, Co₂S₃, Cr₂S₃, MnS, MnS₂, NiS, Cu₂S, CuS, ZnS, CdS, ZrS₂, WS₂, WS₃, SnS, SnS₂, MoS₂, In₂S₃, Bi₂S₃, Sb₂O₃, Ce₂S₃, CeS₂, Ag₂S, Ga₂S₃, Hg₂S, HgS, PbS, PbS₂ und/oder PdS;
- Metallhalogeniden, wie etwa: AgCl, AgBr, AgCl, HgCl₂ und/oder Hg₂Cl₂;
- Metallphosphaten, wie etwa: Cu₃(PO₄)₂, Cu₂(OH)PO₄, Ag₃PO₄, Fe₃(PO₄)₂, Zn₃(PO₄)₂, Ni₃(PO₄)₂, FePO₄, CePO₄, BiPO₄ und/oder TiP₂O₇;
- organischen Halbleitern, wie etwa: kovalenten organischen Gerüsten, C₃N₄, Polyacetylen, Polythiophen und/oder Polypyrrol; wobei diese Materialien dotiert oder undotiert sein können;
- hybriden organisch-anorganischen Halbleitern, wie etwa: zum Beispiel metallorganischen Gerüsten; und
- Kombinationen davon.

4. Plattenreaktor nach einem der vorhergehenden Ansprüche, wobei das transparente obere Fenster (6) aus Borsilikatglas, eisenarmem Glas, Quarz und/oder Polycarbonat hergestellt ist.

5. Plattenreaktor nach einem der vorhergehenden Ansprüche, wobei der flache Behälter (4) vorzugsweise hergestellt ist aus:
- einem Metall, ausgewählt aus Aluminium, Edelstahl, Messing, Eisen und/oder Titan;
- einem Kunststoff, ausgewählt aus Harzen, Polyvinylchlorid, Polyurethan, Polypropylen und/oder Polyethylen;
- einem Keramikmaterial, ausgewählt aus Aluminiumoxid, Ton und/oder Stein; und
- Kombinationen davon.

6. Plattenreaktor nach einem der vorhergehenden Ansprüche, wobei der flache Behälter (4) mit mindestens einer Einlassöffnung (1) und mindestens einer Auslassöffnung (2) für die Strömung des wässrigen Abstroms versehen ist.

7. Plattenreaktor nach einem der vorhergehenden Ansprüche, der auch ein Sonnenverfolgungssystem umfasst, auf dem die mindestens eine flache Platte montiert ist, wobei das Sonnenverfolgungssystem dazu bestimmt ist, das transparente obere Fenster (6) der Platte entlang des Azimuts zu lenken.

8. Verwendung eines photokatalytischen Plattenreaktors nach einem der Ansprüche 1 bis 7 zur Behandlung von wässrigen Abfallabwässern, die aus Lebensmittelindustrieaktivitäten, pharmazeutischen Industrien, Kosmetik- oder Körperpflegeproduktindustrien, chemischen oder petrochemischen Industrien, Bioraffinerien oder Biokraftstoffproduktionsanlagen, Papierherstellungsindustrien, Landwirtschafts- und Landwirtschaftsaktivitäten und menschlichen Hygieneaktivitäten stammen.

## Revendications

1. Réacteur à panneau photocatalytique pour le photoreformage anaérobie d'effluents aqueux résiduaires et la production d'hydrogène comme coproduit, **caractérisé en ce qu'**il comprend :
- au moins un panneau plat comprenant
o un récipient peu profond (4) et
o une fenêtre supérieure transparente (6), ladite fenêtre supérieure (6) étant destinée à faire face à une source de lumière ;
- un lit (5) composé d'un matériau photocatalytique, comprenant au moins un semi-conducteur photoactif, immobilisé dans celui-ci, le lit étant situé sur une surface irradiée du panneau plat ;
- une zone d'écoulement (8) située dans le récipient peu profond (4), ladite zone étant disposée de manière à ce qu'un effluent aqueux résiduaire la traverse et entre en contact étroit avec le matériau photocatalytique immobilisé dans le lit (5) ; et
- un joint d'étanchéité (9) disposé entre récipient peu profond (4) et la fenêtre transparente supérieure (6), destiné à assurer l'étanchéité du panneau et son isolation de l'air ambiant ;
- (i) des orifices de sortie de gaz (3) prévus dans le récipient (4), lesdits orifices de sortie étant reliés par des tubes à au moins un réservoir de stockage étanche au gaz ; ou, alternativement,
- (ii) un circuit de recirculation pourvu de :
- un réservoir
- au moins une pompe externe destinée à faire recirculer l'effluent aqueux du réservoir vers le récipient (4) et puis du récipient (4) vers le réservoir ; et
- une chambre de séparation gaz-liquide, ladite chambre de séparation gaz-liquide étant reliée par des tubes à au moins un réservoir de stockage étanche au gaz et située dans une partie élevée du circuit de recirculation ;
dans lequel
- le matériau photocatalytique contient également au moins un co-catalyseur sous la forme de particules déposées à la surface du semi-conducteur photoactif, ledit co-catalyseur comprenant :
odes métaux, tels que Cu, Fe, Co, Ni, Zn, Sn, Cr, Pb, Bi, Ag, Au, Pd, Rh, Ru, Pt, Ir ou Cd ;
∘ des oxydes métalliques, sulfures métalliques, phosphures métalliques et/ou espèces organométalliques ; et
∘ des combinaisons de ceux-ci.

2. Réacteur à panneau selon la revendication 1, dans lequel le lit (5) est une couche dont l'épaisseur est comprise entre 1 et 100 micromètres.

3. Réacteur à panneau selon l'une quelconque des revendications précédentes dans lequel le semi-conducteur photoactif est choisi parmi :
- des oxydes métalliques, tels que : TiO₂, FeO, Fe₂O(₃), Fe₃O₄, CoO, Co₂O₃, Cr₂O₃, MnO, Mn₂O₃, MnO₂, NiO, Ni₂O₃, Cu₂O, CuO, ZnO, ZrO₂, WO₃, SnO, SnO₂, Nb₂O₅, Ta₂O₅, In₂O₃, Bi₂O₃, Sb₂O₃, Ce₂O₃, CeO₂, Ag₂O, Ga₂O₃, CdO, Hg₂O, HgO, PbO, PbO₂, et/ou PdO ;
- des oxydes métalliques mixtes, y compris des pérovskites, tels que : AlTiO₃, Al₂TiO₅, BaTiO₃, CaTiO₃, MgTiO₃, SrTiO₃, CoTiO₃, FeTiO₃, NiTiO₃, CuTiO₃, MnTiO₃, ZnTiO₃, KNbO₃, NaNbO₃, YFeO₃, CuFe₂O₄, BiVO₄, KTaO₃, et/ou NaTaO₃ ;
- des sulfures métalliques, tels que : TiS₂, FeS, Fe₂S₃, CoS, Co₂S₃, Cr₂S₃, MnS, MnS₂, NiS, Cu₂S, CuS, ZnS, CdS, ZrS₂, WS₂, WS₃, SnS, SnS₂, MoS₂, In₂S₃, Bi₂S₃, Sb₂O₃, Ce₂S₃, CeS₂, Ag₂S, Ga₂S₃, Hg₂S, HgS, PbS, PbS₂, et/ou PdS ;
- des halogénures métalliques, tels que : Agl, AgBr, AgCl, HgCl₂, et/ou Hg₂Cl₂ ;
- des phosphates métalliques, tels que : Cu₃(PO₄)₂, Cu₂(OH)PO₄, Ag₃PO₄, Fe₃(PO₄)₂, Zn₃(PO₄)₂, Ni₃(PO₄)₂, FePO₄, CePO₄, BiPO₄, et/ou TiP₂O₇;
- des semi-conducteurs organiques tels que : structures organiques covalentes, C₃N₄, polyacétylène, polythiophène et/ou polypyrrole ; ces matériaux peuvent être dopés ou non ;
- des semi-conducteurs hybrides organiques-inorganiques, tels que : par exemple des structures métallo-organiques ; et
- des combinaisons de ceux-ci.

4. Réacteur à panneau selon l'une quelconque des revendications précédentes, dans lequel la fenêtre transparente supérieure (6) est fabriquée en verre borosilicaté, en verre à faible teneur en fer, en quartz et/ou en polycarbonate.

5. Réacteur à panneau selon l'une quelconque des revendications précédentes, dans lequel le récipient peu profond (4) est de préférence fabriqué à partir de :
- un métal choisi parmi l'aluminium, l'acier inoxydable, le laiton, le fer et/ou le titane;
- une matière plastique choisie parmi des résines, le chlorure de polyvinyle, le polyuréthane, le polypropylène et/ou le polyéthylène ;
- un matériau céramique choisi parmi l'alumine, l'argile et/ou la pierre ; et
- des combinaisons de ceux-ci.

6. Réacteur à panneau selon l'une quelconque des revendications précédentes, dans lequel le récipient peu profond (4) est pourvu d'au moins un orifice d'entrée (1) et d'au moins un orifice de sortie (2) pour l'écoulement de l'effluent aqueux.

7. Réacteur à panneau selon l'une quelconque des revendications précédentes, comprenant également un système de suivi du soleil sur lequel est monté le au moins un panneau plat, le système de suivi du soleil étant destiné à orienter la fenêtre transparente supérieure (6) dudit panneau le long de l'azimut.

8. Utilisation d'un réacteur à panneau photocatalytique selon l'une quelconque des revendications 1 à 7, pour le traitement d'effluents aqueux résiduaires provenant d'activités de l'industrie alimentaire, de l'industrie pharmaceutique, de l'industrie des produits cosmétiques ou de soins personnels, de l'industrie chimique ou pétrochimique, de bioraffineries ou d'usines de production de biocarburants, de l'industrie papetière, de l'agriculture et des activités agricoles et d'activités d'assainissement humain.
